## Europäisches Patentamt
## European Patent Office
## Office européen des brevets

(19)

(11) Veröffentlichungsnummer : **0 040 214 B1**

(12) **EUROPÄISCHE PATENTSCHRIFT**

(45) Veröffentlichungstag der Patentschrift :
**05.10.83**

(51) Int. Cl.³ : **B 60 T 15/42**

(21) Anmeldenummer : **80902171.0**

(22) Anmeldetag : **12.11.80**

(86) Internationale Anmeldenummer :
**PCT/DE 80/00170**

(87) Internationale Veröffentlichungsnummer :
**WO WO/81013 (28.05.81 Gazettee 81/13)**

(54) **BETRIEBSBREMSBESCHLEUNIGER FÜR INDIREKTE DRUCKLUFTBREMSEN VON SCHIENENFAHRZEUGEN.**

(30) Priorität : **19.11.79 DE 2946657**

(43) Veröffentlichungstag der Anmeldung :
**25.11.81 Patentblatt 81/47**

(45) Bekanntmachung des Hinweises auf die Patenterteilung : **05.10.83 Patentblatt 83/40**

(84) Benannte Vertragsstaaten :
**CH DE FR GB LI**

(56) Entgegenhaltungen :
**DE A 2 634 320**
**DE A 2 647 283**
**US A 4 145 090**
**US A 4 175 792**

(73) Patentinhaber : **Knorr-Bremse GmbH**
**Moosacher Strasse 80**
**D-8000 München 40 (DE)**

(72) Erfinder : **EDER, Herbert**
**Kolpingweg 8**
**D-8015 Markt Schwaben (DE)**

## Betriebsbremsbeschleuniger für indirekte Druckluftbremsen von Schienenfahrzeugen

Die Erfindung bezieht sich auf einen Betriebsbremsbeschleuniger für indirekte Druckluftbremsen von Schienenfahrzeugen, mit

— einer über eine Düse mit der Hauptluftleitung verbundenen Bezugsdruckkammer,

— einem vom Druck in der Hauptluftleitung entgegen dem Druck in der Bezugsdruckkammer belasteten Steuerkolben,

— einem vom Steuerkolben bei überwiegender Beaufschlagung vom Druck in der Bezugsdruckkammer schließbaren Absperrventil in einer Verbindung von der Hauptluftleitung zu einer mit einem Hilfsdruck beaufschlagten Kolbenkammer,

— einer vom Steuerkolben bei überwiegender Beaufschlagung vom Druck in der Bezugsdruckkammer öffenbaren Auslaßventileinrichtung in gedrosselten Verbindungen von der Hauptluftleitung und von der Kolbenkammer zur Atmosphäre, und

— einem von einem Ventikolben gesteuerten Entlüftungsventil in einer über eine weitere Düse gedrosselten Verbindung von der Bezugsdruckkammer zur Atmosphäre, wobei

— der Ventilkolben in Schließrichtung des Entlüftungsventils von der Kraft einer Feder und dem Druck in der Kolbenkammer entgegen dem bei geschlossenem Entlüftungsventil nur auf eine Teilfläche wirkenden Druck in der Bezugsdruckkammer belastet ist und wobei

— der Steuerkolben, das Absperrventil und die Auslaßventileinrichtung gleichachsig angeordnet und das Absperrventil und die Auslaßventileinrichtung vermittels eines mit dem Steuerkolben verbundenen Ventilstößels betätigbar sind.

Ein derartiger Betriebsbremsbeschleuniger ist bekanntgeworden. Bei einem solchen bekannten Betriebsbremsbeschleuniger ist die Auslaßventileinrichtung von der Hauptluftleitung und von der Kolbenkammer zur Atmosphäre zu einem einzigen Ventil zusammengefaßt, welches bei überwiegender Beaufschlagung des Steuerkolbens vom Druck in der Bezugsdruckkammer voreilend zum Schließen des Absperrventils geöffnet wird ; die Auslaßventileinrichtung und das Absperrventil sind somit in einer bestimmten Funktionsphase des bekannten Betriebsbremsbeschleunigers gleichzeitig geöffnet. Der Ventilkolben ist seitlich neben dem Steuerkolben angeordnet, wodurch sich eine baulich aufwendige Konstruktion ergibt. Dieser bekannte Betriebsbremsbeschleuniger ist mit den Mängeln behaftet, daß unter bestimmten Bedingungen, beispielsweise bei langsamer Druckabsenkung in der Hauptluftleitung, wie sie bei langen Zügen und großem, durch den Betriebsbremsbeschleuniger zu entlüftendem Volumen der Hauptluftleitung bedingt sein kann, der Steuerkolben in seiner Lage bei schon geöffneter Auslaßventileinrichtung und noch geöffnetem Absperrventil hängen bleibt, sich also nicht bis zum Schließen des Absperrventils weiterbewegt. Es ist also nicht sichergestellt, daß der Betriebsbremsbeschleuniger in seine vorgesehene Betriebsfunktion mit pulsierender Abzapfung von Luft aus der Hauptluftleitung zur Atmosphäre eintritt, und es ist somit eine Unsicherheit über die Funktionsweise und die aus der Hauptluftleitung abgezapfte Druckluftmenge beim bekannten Betriebsbremsbeschleuniger gegeben. Weiterhin ist bei dem bekannten Betriebsbremsbeschleuniger nicht ausgeschlossen, daß sich die weitere Düse in der Verbindung von der Bezugsdruckkammer zur Atmosphäre teilweise zusetzt, beim Öffnen des Entlüftungsventils sich also eine zu langsame Absenkung des Druckes in der Bezugsdruckkammer ergibt. Beim bekannten Betriebsbremsbeschleuniger hält bei einer derartigen Störung mit geringfügiger Ursache der Steuerkolben das in die Verbindung von der Hauptluftleitung zur Auslaßventileinrichtung eingeordnete Absperrventil ständig geschlossen, so daß der Betriebsbremsbeschleuniger keine Luft aus der Hauptluftleitung abzapfen und keine die Druckabsenkung in der Hauptluftleitung unterstützende Beschleunigungswirkung ausüben kann.

Mit der US-PS 3 988 044 ist ein Betriebsbremsbeschleuniger anderer Bauart bekanntgeworden, bei welchem durch eine mechanische Tothubeinrichtung zwischen einem Steuerkolben und einer einen Hilfskolben aufweisenden Steuerstange eine derartige Betätigungsfolge der einzelnen Ventile vorgesehen ist, daß die vorstehend geschilderten Mängel nicht auftreten können. Die Tothubeinrichtung dieses Betriebsbremsbeschleunigers ist jedoch teuer und verschleißanfällig und nur im Zusammenwirken mit bestimmten Reibungen an der Ventilstange voll funktionsfähig. Da die Reibwerte sich im Laufe des Betriebes jedoch ändern können, ist keine Gewähr für ein stets ordnungsgemäßes Arbeiten dieses Betriebsbremsbeschleunigers gegeben.

Der Erfindung liegt die Aufgabe zugrunde, einen Betriebsbremsbeschleuniger der eingangs genannten Art zu schaffen, welcher bei einfachem, billigen Aufbau mit wenigen Einzelteilen und geringem Wartungsaufwand stets eine ordnungsgemäße Funktion gewährleistet. Diese Aufgabe wird nach der Erfindung dadurch gelöst, daß

— die Auslaßventileinrichtung in ein erstes Auslaßventil zwischen der Hauptluftleitung und der Atmosphäre und

— ein räumlich getrenntes, zweites Auslaßventil zwischen der Kolbenkammer und der Atmosphäre aufgegliedert ist, daß

— ausgehend von der Ruhestellung und bezogen auf den Steuerkolben, der Schließhub des Absperrventils höchstens gleich und der Öffnungshub des zweiten Auslaßventils größer als der Öffnungshub des ersten Auslaßventils ist, und daß

— der Ventilkolben gleichachsig zum Steuerkolben angeordnet ist und auf Seiten seiner Beaufschlagung vom Druck in der Kolbenkammer gegen das Ende des Ventilstößels anlegbar ist.

Die Aufgliederung der Auslaßventileinrichtung in die beiden Auslaßventile und der unterschiedliche Öffnungshub für diese Auslaßventile gewährleistet eine Folge von Steuerungsvorgängen, welche ein unerwünschtes Hängenbleiben des Steuerkolbens in einer Zwischenstellung ausschließt, und die Anordnung des Ventilkolbens mit dessen Anlegemöglichkeit gegen den Ventilstößel unterstützt die Steuerkolbenbewegungen derart, daß eine ausreichende Beschleunigungswirkung durch Abzapfen genügender Druckluftmengen aus der Hauptluftleitung erreicht wird.

Die nach der weiteren Erfindung zweckmäßige Ausgestaltung des Betriebsbremsbeschleunigers ist den Unteransprüchen entnehmbar.

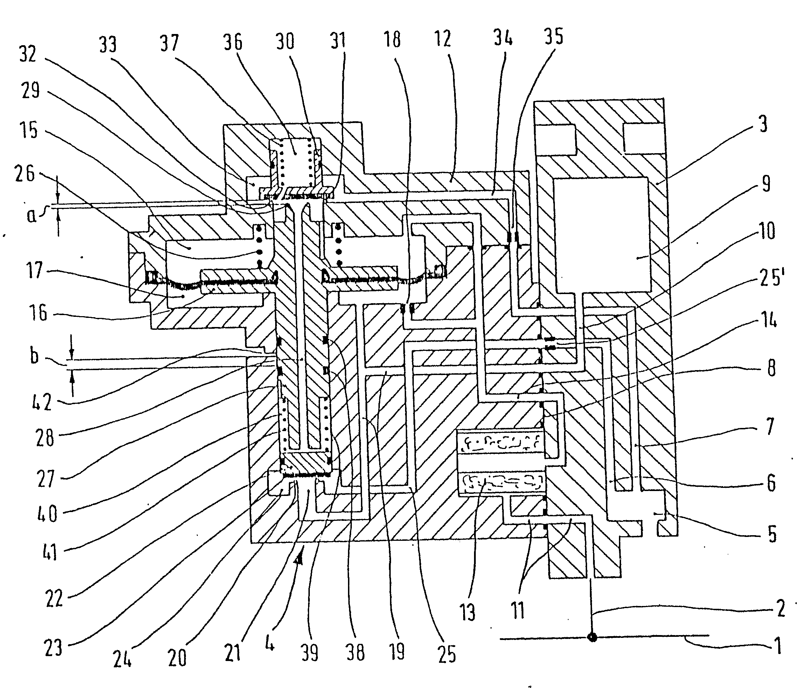

Die Zeichnung zeigt als Ausführungsbeispiel für die Erfindung ein schematisches Schnittbild durch einen erfindungsgemäß ausgestalteten Betriebsbremsbeschleuniger.

Von einer Hauptluftleitung 1 führt eine Zweigleitung 2 zu einem Ventilträger 3, an welchen der Betriebsbremsbeschleuniger 4 wartungsgünstig angeflanscht ist. Im Ventilträger 3 befindet sich eine verschmutzungsgeschützte, ständig mit der Atmosphäre verbundene Auslaßkammer 5, von welcher zwei Kanalverbindungen 6 und 7 zur Flanschverbindung 8 mit dem Betriebsbremsbeschleuniger 4 führen. Weiterhin befindet sich im Ventilträger 3 eine Bezugsdruckkammer 9 mit einer weiteren Kanalverbindung 10 zur Flanschverbindung 8.

Von der Zweigleitung 2 führt ein Kanal 11 zu einem üblichen, im Gehäuse 12 des Betriebsbremsbeschleunigers 4 angeordneten und bei gelöster Flanschverbindung 8 von dieser aus zugänglichen Luftfilter 13. Vom Luftfilter 13 führt eine zum Teil im Ventilträger 3 verlaufende und die Flanschverbindung 8 durchsetzende Kanalverbindung 14 zu einer Hauptluftleitungskammer 15, die mittels eines als Membrankolben ausgebildeten Steuerkolbens 16 von einer Kammer 17 abgetrennt ist. Die über eine Düse 18 an die Kanalverbindung 14 angeschlossene Kammer 17 steht über einen Kanal 19 mit einem von einem Ventilsitz 20 umgebenen Raum 21 und der Kanalverbindung 10 und damit der Bezugsdruckkammer 9 in Verbindung. Der Ventilsitz 20 bildet zusammen mit einer auf ihm aufliegenden, an einem Ventilkolben 22 gehaltenen Ventildichtung 23 ein Entlüftungsventil 20, 23, welches zwischen den Raum 21 und einen den Ventilsitz 22 umgebenden Ringraum 24 eingeordnet ist. Vom Ringraum 24 führt ein Kanal 25 durch eine Düse 25' und die Kanalverbindung 6 zur Auslaßkammer 5.

Der von einer in der Hauptluftleitungskammer 15 angeordneten Feder 26 belastete Steuerkolben 16 ist von einem Ventilstößel 27 durchsetzt, welcher eine sich über seine ganze Länge erstreckende Axialbohrung 28 aufweist. Auf Seiten der Hauptluftleitungskammer 15 endet der Ventilstößel 27 mit einem die Mündung der Axialbohrung 28 umgebenden Ventilsitz 29, dem eine andererseits einem abgedichtet verschieblich im Gehäuse 12 geführten Rohransatz 30 aufweisende Doppelventildichtplatte 31 gegenübersteht. Der Ventilsitz 29 bildet zusammen mit der Doppelventildichtplatte 31 ein Absperrventil 29, 31 zwischen der Hauptluftleitungskammer 15 und der Axialbohrung 28. Die zweite Dichtfläche der Doppelventildichtplatte 31 bildet zusammen mit einem weiteren, gehäusefesten Ventilsitz 32 ein erstes Auslaßventil 31, 32 zwischen der Hauptluftleitungskammer 15 und einem die Doppelventildichtplatte 31 aufnehmenden Raum 33, der über einen Kanal 34, eine Düse 35 und die Kanalverbindung 7 ständig an die Auslaßkammer 5 angeschlossen ist. Im vom Rohransatz 30 umschlossenen, über eine Durchbrechung der Doppelventildichtplatte 31 mit dem Raum zwischen den beiden Ventilsitzen 29 und 32 verbundenen Raum 36 befindet sich eine die Doppelventildichtplatte 31 belastende Feder 37. Der auf Seiten der Kammer 17 vom Steuerkolben 16 auskragende Teil des Ventilstößels 27 ist in seinem mittleren Abschnitt mittels zweier Dichtringe 38 in Art eines Ventilschiebers abgedichtet verschieblich im Gehäuse 12 gelagert. Der Endabschnitt des Ventilstößels 27 weist einen verringerten Durchmesser auf, so daß zwischen ihm und der Wandung 39 des Gehäuses 12 eine ringförmige Kolbenkammer 40 gebildet ist, welche ständig mit der Axialbohrung 28 in Verbindung steht und in welcher sich eine Feder 41 befindet, welche einerseits am Ventilstößel 27 und andererseits am Ventilkolben 22 anliegt. Der an der Wandung 39 der Kolbenkammer 40 geführte Ventilkolben 22 weist den gleichen Durchmesser wie der Ventilstößel 27 auf, dieser Durchmesser ist um ein Vielfaches geringer als der Durchmesser des Schaltkolbens 16. Der Durchmesser des Ventilsitzes 20 ist kleiner als der Durchmesser des Ventilkolbens 22, so daß der im Raum 21 anstehende Druck nur eine Teilfläche des Ventilkolbens 22 beaufschlagt. Das Gehäuse 12 weist eine in die Führungsbohrung für den ventilschieberartigen Abschnitt des Ventilstößels 27 mündende, gedüste Entlüftungsbohrung 42 auf, welche vom nach der Zeichnung unteren Dichtring 38 überschleifbar ist.

Im Ruhezustand des Betriebsbremsbeschleunigers nimmt dieser die dargestellte Lage ein, wobei sich der Steuerkolben 16 in seiner gemäß der Zeichnung unteren Endstellung befindet. Das baulich zum Doppelventil 29, 31, 32 zusammengefaßte Absperrventil 29, 31 und erste Auslaßventil 31, 32 nimmt die gezeigte Schaltstellung ein, wobei das erste Auslaßventil 31, 32 durch Auflage der Doppelventildichtplatte 31 auf dem Ventilsitz 32 geschlossen und das Absperrventil 29, 31 mit einem zu seinem Schließen zu überwindenden Schließhub a geöffnet ist. Der untere der beiden Dichtringe 38 befindet sich mit einem einen Öffnungshub b darstellenden Abstand unterhalb der Entlüftungsbohrung 42, derart, daß das aus dem Dichtring 38 und der Entlüftungsbohrung 42 gebildete, das zweite Auslaßventil darstellende Schieberventil 38, 42 sich erst nach Anheben des Ventilstößels 27 um den Öffnungshub b öffnet. Das Entlüftungsventil 20, 23 ist geschlossen. Bei gelöster Druckluftbremse herrscht in der Hauptluftleitung 1 und damit auch in der Hauptluftleitungskammer 15 sowie in der über die Düse 18 gefüllten Kammer 17, der Bezugsdruckkammer 9, dem Raum 21 und der Kolbenkammer 40 Regeldruckhöhe.

Wird zum Einleiten einer Betriebsbremsung der Druck in der Hauptluftleitung 1 mit einem bestimmten, Betriebsbremsungen entsprechenden Druckgradienten abgesenkt, so sinkt auch der Druck in der Hauptluftleitungskammer 15 entsprechend mit ab. Über die Düse 18 wird der Druck in der Kammer 17 zurückgehalten, der Steuerkolben 16 hebt sich daher entgegen der Kraft der Feder 26 an. Dabei gelangt der Ventilsitz 29 nach Überwinden des Schließhubes a zur Anlage an der Doppelventildichtplatte 31, so daß das Absperrventil 29, 31 geschlossen wird und der in der Kolbenkammer 40 herrschende Druck von der Hauptluftleitung 1 abgesperrt wird und nicht mit dem Hauptluftleitungsdruck sinken kann. Bei geringfügiger, weiterer Druckabsenkung in der Hauptluftleitung setzt der Steuerkolben 16 seine Hubbewegung unter Mitnahme der Doppelventildichtplatte 31 entgegen der Kraft der Feder 37 fort, wobei das erste Auslaßventil 31, 32 geöffnet wird und Druckluft aus der Hauptluftleitung 1 durch die Hauptluftleitungskammer 15 und das geöffnete Auslaßventil 31, 32 sowie die Düse 35 und die Auslaßkammer 5 zur Atmosphäre abströmt ; durch dieses Abströmen von Druckluft aus der Hauptluftleitung 1 wird die Druckabsenkung in der Hauptluftleitung 1 derart verstärkt und aufgefrischt, daß auch die Bremsanlagen von Fahrzeugen, die im Zugverband auf das den Betriebsbremsbeschleuniger 4 aufweisende Fahrzeug folgen, sicher ansprechen. Durch das Abströmen von Druckluft aus der Hauptluftleitungskammer 15 wird die Hubbewegung des Steuerkolbens 16 verstärkt, so daß nach Zurücklegen des Öffnungshubes b der untere Dichtring 38 die bisher zwischen den beiden Dichtringen 38 befindliche und damit abgeschlossene Entlüftungsbohrung 42 überschleift. Die in der Kolbenkammer 40 gespeicherte, den Ventilkolben 22 belastende Druckluft strömt nunmehr über die Entlüftungsbohrung 42 zur Atmosphäre ab, und der im Raum 21 anstehende, eine Teilfläche des Ventilkolbens 22 belastende Druck der Kammer 17 vermag daher den Ventilkoben 22 entgegen der Kraft der Feder 41 anzuheben.

Aus der Kammer 17, aus welcher bisher nur eine geringe Luftmenge durch die Düse 18 zur Hauptluftleitung 1 abströmen konnte, strömt nun zusätzlich durch den Kanal 19, den Raum 21, das geöffnete Entlüftungsventil 20, 23, den Kanal 25 mit der Düse 25' und die Auslaßkammer 5 Druckluft zur Atmosphäre ab, derart, daß der Druck in der Kammer 17 schneller als in der Hauptluftleitungskammer 15 absinkt. Es ist wesentlich, daß beim Öffnen des Entlüftungsventils 20, 23 der zuvor nur im Raum 21 anstehende Druck auch den Ringraum 24 und damit die gesamte, untere Fläche des Ventilkolbens 22 beaufschlagt, so daß dieser nunmehr mit beachtlichem Kraftüberschuß angehoben wird, sich an das untere Ende des Ventilstößels 27 anlegt und auf den Ventilstößel 27 eine nach oben gerichtete Kraft ausübt ; die durch Entlüftung der Kolbenkammer 40 wegfallende, pneumatische Belastung des Ventilstößels 27 wird somit durch die vom Ventilkolben 22 ausgeübte Kraft ersetzt, und das erste Auslaßventil 31, 32 bleibt daher vorerst weiter geöffnet. Nach ausreichender Druckabsenkung in der Kammer 17 bis auf einen etwa augenblicklich auch in der Hauptluftleitungskammer 15 herrschenden Druck senkt sich der Steuerkolben 16 mit dem Ventilstößel 27 wieder ab, wobei zuerst der untere Dichtring 38 die Entlüftungsbohrung 42 überschleift und damit das Schieberventil 38, 42 schließt, also die Kolbenkammer 40 von der Atmosphäre absperrt, sodann sich die Doppelventildichtplatte 31 auf den Ventilsitz 32 auflegt und somit durch Schließen des ersten Auslaßventils 31, 32 die Entlüftung der Hauptluftleitung 1 sowie der Hauptluftleitungskammer 15 durch das erste Auslaßventil 31, 32 unterbricht und schließlich sich der Ventilsitz 29 von der Doppelventildichtplatte 31 nach unten senkt, wodurch durch das nunmehr wieder geöffnete Absperrventil 29, 31 Hauptluftleitungsdruck durch die Axialbohrung 28 in die Kolbenkammer 40 einströmt. Der sich in der Kolbenkammer 40 aufbauende Druck vermag durch die Unterstützung durch die Feder 41 den Ventilkolben 22 entgegen dessen Beaufschlagung durch den in den Räumen 21 und 24 anstehenden Druck nach unten zu verschieben, wobei das Entlüftungsventil 20, 23 geschlossen und damit die zusätzliche Entlüftung der Kammer 17 unterbrochen wird. Damit ist ein Funktionszyklus des Betriebsbremsbeschleunigers beendet.

Falls der Druck in der Hauptluftleitung 1 weiterhin absinkt, wiederholen sich die vorstehend geschilderten Vorgänge, wobei über den Betriebsbremsbeschleuniger wieder Druckluft aus der Hauptluftleitung 1 zur Atmosphäre abgezapft wird, solange das erste Auslaßventil 31, 32 geöffnet ist. Die Funktionszyklen des Betriebsbremsbeschleunigers 4 wiederholen sich, solange der Druck in der Hauptluftleitung 1 abgesenkt wird. Wird der Druck in der Hauptluftleitung 1 auf einer erniedrigten, einer bestimmten Bremsstufe entsprechenden Druckhöhe konstant gehalten, so beendet der Betriebsbremsbeschleuniger 4 bei Erreichen der dargestellten Schaltlage seine Funktionszyklen, bleibt in Ruhe und zapft keine weitere Luft aus der Hauptluftleitung 1 zur Atmosphäre ab. Bei späterer, weiterer Druckabsenkung in der Hauptluftleitung 1 nimmt der Betriebsbremsbeschleuniger 4 jedoch seine vorstehend geschilderte Tätigkeit mit zyklischer Luftabzapfung aus der Hauptluftleitung 1 wieder auf, und alle geschilderten Vorgänge wiederholen sich entsprechend.

Wird die Hauptluftleitung 1 zum nachfolgenden Lösen der Bremsen wieder auf Regeldruckhöhe aufgeladen, so behält der Betriebsbremsbeschleuniger 4 seine dargestellte Schaltlage bei, während seine mit der Hauptluftleitung 1 verbundenen Räume und Kammern ebenfalls auf Regeldruckhöhe aufgeladen werden. Damit ist der Ausgangszustand wieder erreicht.

Durch die Ausbildung und Anordnung der Ventile in Verbindung mit den unterschiedlichen Schließ-bzw. Öffnungshüben a und b wird beim Betriebsbremsbeschleuniger 4 eine sichere Schaltfolge erzwungen, welche sicherstellt, daß das Entlüftungsventil 20, 23 beim Anheben des Steuerkolbens 16, also in der ersten Hälfte eines Funktionszyklusses, als letztes Ventil schaltet, d. h. öffnet, in der zweiten Hälfte des Funktionszyklusses beim Absenken des Steuerkolbens 16 aber ebenfalls als letztes Ventil schaltet, d. h. wieder schließt, wobei ein Hängenbleiben des Steuerkolbens 16 in irgendwelchen Zwischenstellungen durch den Schaltfolgeablauf ausgeschlossen ist.

Auch kann ein teilweises oder ganzes Zusetzen der kleinen, die Entlüftungsvorgänge für die Kammer 17 bzw. die Kolbenkammer 40 überwachenden Düse 25' bzw. Entlüftungsbohrung 42 keinen Ausfall des Betriebsbremsbeschleunigers 4 bewirken, da bei Druckabsenkungen in der Hauptluftleitung 1 und der Hauptluftleitungskammer 15 der Steuerkolben 16 jedenfalls bis zum Öffnen des ersten Auslaßventils 31, 32 angehoben wird und somit über den Betriebsbremsbeschleuniger 4 zusätzlich Druckluft aus der Hauptluftleitung 1 abgezapft wird. Ein rasches Einbremsen des Fahrzeuges bzw. Zuges ist also auch in diesem Falle gewährleistet.

Der gleiche Durchmesser des Ventilstößels 27 und des Ventilkolbens 22 gewährleistet nach Entlüftung der Kolbenkammer 40 und Anlegen des Ventilkolbens 22 gegen das untere Ende des Ventilstößels 27, daß durch diese Vorgänge keine Kraftänderung, bezogen auf das aus Ventilstößel 27 und Steuerkolben 16 bestehende System erfolgt, das hierbei geöffnete, erste Auslaßventil 31, 32 also sicher weiter geöffnet gehalten bleibt. Die Abstützung des oberen Endes der Feder 41 gegen den Ventilstößel 27 unterstützt diese Funktionsweise ; prinzipiell ist es jedoch auch möglich, das obere Ende der Feder 41 gegen einen Gehäuseanschlag abzufangen.

Die Entlastung der Doppelventildichtplatte 31 durch Beaufschlagen des Raumes 36 mit dem zwischen den Ventilsitzen 29 und 32 herrschenden Druck ergibt eine niedrige, im wesentlichen durch die Feder 26 bestimmte Ansprechschwelle des Betriebsbremsbeschleunigers.

Bezugszeichen

1 = Hauptluftleitung
2 = Zweigleitung
3 = Ventilträger
4 = Betriebsbremsbeschleuniger
5 = Auslaßkammer
6 = Kanalverbindung
7 = Kanalverbindung
8 = Flanschverbindung
9 = Bezugsdruckkammer
10 = Kanalverbindung
11 = Kanal
12 = Gehäuse
13 = Luftfilter
14 = Kanalverbindung
15 = Hauptluftleitungskammer
16 = Steuerkolben
17 = Kammer
18 = Düse
19 = Kanal
20 = Ventilsitz
21 = Raum
22 = Ventilkolben
23 = Ventildichtung
20, 23 = Entlüftungsventil
24 = Ringraum
25 = Kanal
25' = Düse
26 = Feder
27 = Ventilstößel
28 = Axialbohrung
29 = Ventilsitz
30 = Rohransatz
31 = Doppelventildichtplatte
29, 31 = Absperrventil
31 = Ventilsitz
31, 32 = 1. Auslaßvetnil
33 = Raum
34 = Kanal
35 = Düse
36 = Raum
37 = Feder
38 = Dichtringe
39 = Wandung
40 = Kolbenkammer
41 = Feder
42 = Entlüftungsbohrung
29, 31, 32 = Doppelventil
a = Schließhub
b = Öffnungshub

**Ansprüche**

1. Betriebsbremsbeschleuniger für indirekte Druckluftbremsen von Schienenfahrzeugen, mit
— einer über eine Düse (18) mit der Hauptluftleitung (1) verbundenen Bezugsdruckkammer (9),
— einem vom Druck in der Hauptluftleitung (1) entgegen dem Druck in der Bezugsdruckkammer (9) belasteten Steuerkolben (16),
— einem vom Steuerkolben (16) bei überwiegender Beaufschlagung vom Druck in der Bezugsdruckkammer (9) schließbaren Absperrventil (29, 31) in einer Verbindung (11, 14, 15, 28) von der Hauptluftleitung (1) zu einer mit einem Hilfsdruck beaufschlagten Kolbenkammer (40),
— einer vom Steuerkolben (16) bei überwiegender Beaufschlagung vom Druck in der Bezugsdruckkammer (9) öffenbaren Auslaßventileinrichtung in gedrosselten Verbindungen (5, 7, 34, 35) von der Hauptluftleitung und von der Kolbenkammer zur Atmosphäre, und

— einem von einem Ventilkolben (22) gesteuerten Entlüftungsventil (20, 23) in einer über eine weitere Düse (25') gedrosselten Verbindung (5, 6, 10, 19, 25) von der Bezugsdruckkammer (9) zur Atmosphäre, wobei

— der Ventilkolben (22) in Schließrichtung des Entlüftungsventils (20, 23) von der Kraft einer Feder (41) und dem Druck in der Kolbenkammer (40) entgegen dem bei geschlossenem Entlüftungsventil (20, 23) nur auf eine Teilfläche wirkenden Druck in der Bezugsdruckkammer (9) belastet ist und wobei

— der Steuerkolben (16), das Absperrventil (29, 31) und die Auslaßventileinrichtung (30, 31, 32) gleichachsig angeordnet und das Absperrventil (29, 31) und die Auslaßventileinrichtung vermittels eines mit dem Steuerkolben (16) verbundenen Ventilstößels (27) betätigbar sind,
dadurch gekennzeichnet, daß

— die Auslaßventileinrichtung in ein erstes Auslaßventil (31, 32) zwischen der Hauptluftleitung (1) und der Atmosphäre und

— ein räumlich getrenntes, zweites Auslaßventil (38, 42) zwischen der Kolbenkammer (40) und der Atmosphäre aufgegliedert ist, daß

— ausgehend von der Ruhestellung und bezogen auf den Steuerkolben (16), der Schließhub (a) des Absperrventils (29, 31) höchstens gleich und der Öffnungshub (b) des zweiten Auslaßventils (38, 42) größer als der Öffnungshub des ersten Auslaßventils (31, 32) ist, und daß

— der Ventilkolben (22) gleichachsig zum Steuerkolben (16) angeordnet ist und auf Seiten seiner Beaufschlagung vom Druck in der Kolbenkammer (40) gegen das Ende des Ventilstößels (27) anlegbar ist.

2. Betriebsbremsbeschleuniger nach Anspruch 1, dadurch gekennzeichnet, daß das Absperrventil (29, 31) und das erste Auslaßventil (31, 32) zu einem Doppelventil (29, 31, 32) zusammengefaßt sind und daß das zweite Auslaßventil als Schieberventil (38, 42) mit dem Ventilstößel (27) als Ventilschieber ausgebildet ist.

3. Betriebsbremsbeschleuniger nach Anspruch 2, dadurch gekennzeichnet, daß der Ventilstößel (27) den Steuerkolben (16) durchsetzt und eine durchgehende Axialbohrung (28) aufweist, daß das auf Seiten der Hauptluftleitungsdruckbeaufschlagung befindliche Ende des Ventilstößels (27) als die Mündung der Axialbohrung (28) umgebender, dem Absperrventil (29, 31) zugehöriger Ventilsitz (29) ausgebildet ist, dem eine von der Feder (37) belastete Doppeldichtplatte (31) gegenübersteht, welche mit einem gehäusefesten, weiteren Ventilsitz (32) das erste Auslaßventil (31, 32) bildet, und daß der Ventilstößel (27) andererseits des Steuerkolbens (16) den abgedichtet verschieblich im Gehäuse geführten Ventilschieber bildet, in die Kolbenkammer (40) ragt und in dieser vor dem an der Wandung (39) der Kolbenkammer (40) geführten Ventilkolben (22) endet.

4. Betriebsbremsbeschleuniger nach Anspruch 3, dadurch gekennzeichnet, daß der Durchmesser des Steuerkolbens (16) vielfach größer als der Durchmesser des Ventilkolbens (22) ist.

5. Betriebsbremsbeschleuniger nach Anspruch 4, dadurch gekennzeichnet, daß der Ventilstößel (27) und der Ventilkolben (22) zumindest annähernd gleichen Durchmesser aufweisen.

6. Betriebsbremsbeschleuniger nach Anspruch 5, dadurch gekennzeichnet, daß die den Ventilkolben (22) belastende Feder (41) andererseits am Ventilstößel (27) abgestützt ist.

7. Betriebsbremsbeschleuniger nach Anspruch 3, dadurch gekennzeichnet, daß die Doppeldichtplatte (31) pneumatisch entlastet im Gehäuse (12) angeordnet ist.

## Claims

1. Service brake accelerator for indirect compressed air brakes of rail vehicles, having

— a reference pressure chamber (9) connected to the main air line (1) via a nozzle (18),

— a control piston (16) loaded by the pressure in the main air line (1) against the pressure in the reference pressure chamber (9),

— a stop valve (29, 31), which can be closed by the control piston (16) in the event of predominant pressure-loading in the reference pressure chamber (9), in a link (11, 14, 15, 28) from the main air line (1) to a piston chamber (40) loaded by an auxiliary pressure,

— a discharge valve device, which can be opened by the control piston (16) in the event of predominant pressure loading in the reference pressure chamber (9), in throttled links (7, 5, 34, 35) from the main air line and from the piston chamber to the atmosphere, and

— a bleeder valve (20, 23), controlled by a valve piston (22), in a connection (5, 6, 10, 19, 25), throttled by a further nozzle (25'), from the reference pressure chamber (9) to the atmosphere,

— the valve piston (22) being loaded in the closing direction of the bleeder valve (20, 23) by the force of a spring (41) and the pressure in the piston chamber (40) against the pressure in the reference pressure chamber (9) acting only on a part surface when the bleeder valve (20, 23) is closed, and

— the control piston (16), the stop valve (29, 31) and the discharge valve device (30, 31, 32) being arranged on the same axis, and the stop valve (29, 31) and the discharge valve device being operable by means of a push-rod (27) connected to the control piston (16),
characterised in that

— the discharge valve device is split up into a first discharge valve (31, 32) between the main air line (1) and the atmosphere and

— a spatially separate, second discharge valve (38, 42) between the piston chamber (40) and the atmosphere, in that

— starting from the rest position and relative to the control piston (16), the closing stroke (a) of the stop valve (29, 31) is at the most the same as, and the opening stroke (b) of the second discharge valve (38, 42) is greater than the opening stroke of the first discharge valve (31, 32), and in that

— the valve piston (22) is arranged on the same axis as the control piston (16), and can be placed against the end of the push-rod (27) on the side of its loading by pressure in the piston chamber (40).

2. Service brake accelerator according to claim 1, characterised in that the stop valve (29, 31) and the first discharge valve (31, 32) are combined to form a double valve (29, 31, 32), and in that the second discharge valve is designed as a slide valve (38, 42) with the pushrod (27) as the valve slider.

3. Service brake accelerator according to claim 2, characterised in that the push-rod (27) passes through the control piston (16) and comprises a through axial bore (28), in that the end of the push-rod (27) situated on the side loaded by the pressure of the main air line is designed as the valve seat (29) enclosing the opening of the axial bore (28) and associated with the stop valve (29, 31), opposite which (29) is a double sealing plate (31) loaded by the spring (37), which (31), together with a further valve seat (32) fixed to the housing, forms the first discharge valve (31, 32), and in that the push-rod (27) forms the valve slider, displaceably guided in the housing in a sealed manner on the other side of the control piston (16), projects into the piston chamber (40) and ends in this before the valve piston (22) guided on the wall (39) of the piston chamber (40).

4. Service brake accelerator according to claim 3, characterised in that the diameter of the control piston (16) is many times greater than the diameter of the valve piston (22).

5. Service brake accelerator according to claim 4, characterised in that the push-rod (27) and the valve piston (22) have at least approximately the same diameter.

6. Service brake accelerator according to claim 5, characterised in that the spring (41) loading the valve piston (22) is supported on the other side on the push-rod (27).

7. Service brake accelerator according to claim 3, characterized in that the double sealing plate (31) is arranged in the housing (12) in a pneumatically unloaded fashion.

## Revendications

1. Accélérateur de freinage de service pour des freins à air comprimé indirects pour des véhicules sur rails, avec

— une chambre à pression de référence (9) reliée par l'intermédiaire d'une tuyère (18) à la conduite principale (1),

— un piston de commande (16) chargé par la pression qui règne dans la conduite principale (1), à l'encontre de la pression qui règne dans la chambre à pression de référence (9),

— une soupape d'arrêt (29, 31) disposée dans une liaison (11, 14, 15, 28) menant de la conduite principale (1) à une chambre à piston (40) chargée par une pression auxiliaire et susceptible d'être fermée lors d'une charge prédominante par la pression qui règne dans la chambre à pression de référence (9),

— un dispositif à soupape d'évacuation disposé dans des liaisons étranglées (7, 5, 34, 35) menant de la conduite principale et de la chambre à piston à l'atmosphère, et susceptible d'être ouverte en cas de charge prédominante par la pression qui règne dans la chambre à pression de référence (9), et

— une soupape de mise à l'atmosphère (20, 23) commandée par un piston de soupape (22) et prévu dans une liaison (5, 6, 10, 19, 25), étranglée par une tuyère supplémentaire (25'), et menant de la chambre à pression de référence (9) à l'atmosphère, dans lequel

— le piston de soupape (22) est chargé, en direction de la fermeture de la soupape de mise à l'atmosphère (20, 23), par la force d'un ressort (41) et par la pression qui règne dans la chambre à piston (40), à l'encontre de la pression qui règne dans la chambre à pression de référence (4), qui n'agit que sur une surface partielle lorsque la soupape de mise à l'atmosphère (20, 23) est fermée, et dans lequel

— le piston de commande (16), la soupape d'arrêt (29, 31) et le dispositif à soupape d'évacuation (30, 31, 32) sont disposés coaxialement, alors que la soupape d'arrêt (29, 31) et le dispositif à soupape d'évacuation sont susceptibles d'être actionnés à l'aide d'un poussoir de soupape (27) relié au piston de commande (16), caractérisé par le fait

— que le dispositif à soupape d'évacuation est subdivisé en une première soupape d'évacuation (31, 32) entre la conduite principale (1) et l'atmosphère, et

— en une seconde soupape d'évacuation (38, 42), spatialement séparée de la première soupape d'évacuation, et située entre la chambre à piston (40) et l'atmosphère,

— qu'en partant de la position de repos et par rapport au piston de commande (16), la course de fermeture (a) de la soupape d'arrêt (29, 31) est au plus égale, et la course (b) de la seconde soupape d'évacuation (38, 42) est supérieure à la course d'ouverture de la première soupape d'évacuation (31, 32), et

— que le piston de soupape (22) est disposé coaxialement par rapport au piston de commande (16) et est susceptible, par son côté chargé par la pression qui règne dans la chambre à piston (40), de s'appliquer contre l'extrémité du poussoir de soupape (27).

2. Accélérateur de freinage de service selon la revendication 1, caractérisé par le fait que la soupape d'arrêt (29, 31) et la première soupape d'évacuation (31, 32) sont rassemblées en une soupape double (29, 31, 32) et que la seconde soupape d'évacuation est réalisée sous la forme d'une soupape à coulisse (38, 42), avec le poussoir de soupape (27) comme coulisse de soupape.

3. Accélérateur de freinage de service selon la revendication 2, caractérisé par le fait que le poussoir de soupape (27) traverse le piston de commande (16) et comporte un perçage axial traversant (28), que l'extrémité du poussoir de soupape (27), qui se situe du côté de la charge de la pression qui règne dans la conduite principale, est réalisée sous la forme d'un siège de soupape (27) qui entoure l'embouchure du perçage axial (28) et appartenant à la soupape d'arrêt (29, 31), siège de soupape en face duquel se trouve une double plaque d'étanchéité (31) chargée par le ressort (37), double plaque d'étanchéité qui constitue, avec un second siège de soupape (32) solidaire du boîtier, la première soupape d'évacuation (31, 32), et que le poussoir de soupape (27) forme, de l'autre côté du piston de commande (16), la coulisse de soupape guidée de façon étanche dans le boîtier, pénètre dans la chambre à piston (40) et se termine dans celle-ci à l'avant du piston de soupape (22) guidé sur la paroi (39) de la chambre à piston (40).

4. Accélérateur de freinage de service selon la revendication 3, caractérisé par le fait que le diamètre du piston de commande (16) est, d'un multiple, plus grand que le diamètre du piston de soupape (22).

5. Accélérateur de freinage de service selon la revendication 4, caractérisé par le fait que le poussoir de soupape (27) et le piston de soupape (22) ont au moins et approximativement le même diamètre.

6. Accélérateur de freinage de service selon la revendication 5, caractérisé par le fait que le ressort (41) qui charge le piston de soupape (22) porte, par ailleurs, contre le poussoir de soupape (27).

7. Accélérateur de freinage de service selon la revendication 3, caractérisé par le fait que la double plaque d'étanchéité (31) est disposée dans le boîtier (12) de manière à être déchargée du point de vue pneumatique.